Europäisches Patentamt

European Patent Office

Office européen des brevets

(11) Veröffentlichungsnummer: **0 235 766**
**B1**

# EUROPÄISCHE PATENTSCHRIFT

(45) Veröffentlichungstag der Patentschrift:
04.04.90

(21) Anmeldenummer: 87102841.1

(22) Anmeldetag: 27.02.87

(51) Int. Cl.⁴: **F16K 17/00**, F16K 11/24, F16K 31/42

(54) **Sicherheitsventil für Hausgeräte.**

(30) Priorität: 03.03.86 DE 3606897

(43) Veröffentlichungstag der Anmeldung:
09.09.87 Patentblatt 87/37

(45) Bekanntmachung des Hinweises auf die Patenterteilung:
04.04.90 Patentblatt 90/14

(84) Benannte Vertragsstaaten:
DE FR IT SE

(56) Entgegenhaltungen:
DE-B- 2 349 237
DE-U- 1 834 836
GB-A- 1 154 231
US-A- 2 587 356
US-A- 3 537 475
US-A- 4 450 863

(73) Patentinhaber: AWECO Kunststofftechnik Gerätebau
GmbH & Co. KG, Schulstrasse 27, D-7995 Neukirch(DE)

(72) Erfinder: Wisskirchen, Michael, Graf-Anton-Strasse 4,
D-7995 Neukirch(DE)

(74) Vertreter: Patentanwälte Dipl.-Ing. E. Eisele Dr.-Ing. H.
Otten, Seestrasse 42, D-7980 Ravensburg(DE)

## Beschreibung

Die Erfindung betrifft ein Sicherheitsventil, insbesondere für Geschirrspüler, Waschmaschinen und dgl., bestehend aus zwei in Reihe geschalteten Ventilen mit diesen einzeln zugeordneten Betätigungsvorrichtungen, entsprechend den Angaben im Oberbegriff von Anspruch 1.

Mit der immer größeren Verbreitung von am Wasserleitungsnetz angeschlossenen Hausgeräten erlangt die Verhütung von Wasserschäden infolge von fehlerhaft austretendem Leitungswasser entsprechend größere Bedeutung. Man versucht zwar, durch Schließen des Wasserhahnes während der Ruhezeiten der Geräte den Platzen oder Undichtwerden des Anschlußschlauches zu vermeiden. Diese Maßnahme greift aber nicht, wenn der Schlauch während des Betriebes platzt oder eine sonstige Störung am Gerät auftritt. Man versucht deshalb schon seit längerer Zeit, mit den verschiedensten Sicherungseinrichtungen der Gefahr des Auslaufens von Leitungswasser zu begegnen.

Bei einem bekannten Sicherheitsventil der einleitend bezeichneten Art gemäß US-A 4 450 863 sind die beiden Servoventile elektromagnetisch betätigt. Der Sicherheitseffekt beruht in diesem Falle auf der Redundanz der den Wasserweg sperrenden Anordnung. Ist eines der beiden Magnetventile defekt, so sperrt wenigstens das andere. Statistisch ist deshalb die Ausfallrate eines solchen Doppelventils wesentlich kleiner als die eines Einzelventils. Der Benutzer kann den an einem der beiden Ventile auftretenden Fehler zunächst nicht erkennen, erst beim Ausfall auch des zweiten Ventils wird er aufmerksam, wenn möglicherweise Folgeschäden schon eingetreten sind.

Nach einem anderen, ebenfalls auf zwei in Reihe geschalteten Ventilen beruhenden bekannten Sicherheitskonzept gemäß DE-B 2 349 237 werden nicht beide Ventile laufend gemeinsam betätigt, sondern das eine der beiden Ventile bleibt ständig geöffnet, und zwar im Ruhezustand und bei Betrieb des betreffenden Haushaltsgeräts. Zeigt sich jedoch an dem arbeitenden anderen Ventil ein Defekt, beispielsweie durch im geschlossenen Zustand austretendes Leckwasser, so wird diese Erscheinung dazu benutzt, das zweite Membranventil zu schließen, sei es, daß ein Schwimmerkontakt die elektromagnetische Betätigung einschaltet oder über eine Luftfalle eine pneumatische Betätigung herbeigeführt wird.

Bei dieser bekannten Ausführung wird also durch den gesperrten Wassereinlauf auf den Defekt aufmerksam gemacht. Ist das Sicherheitsventil unmittelbar am Wasserhahn montiert, dann lassen sich Wasserschäden so wirkungsvoll verhindern, daß den Kunden sogar empfohlen werden kann, den Wasserhahn, an dem das betreffende Gerät angeschlossen ist, dauernd geöffnet zu lassen.

Allerdings ist der Aufwand für eine solche Lecküberwachungseinrichtung verhältnismäßig groß. Außerdem ist eine Kabel- oder Schlauchverbindung zwischen dem Haushaltsgerät und dem am Wasserhahn montierten Sicherheitsventil erforderlich, eine Verbindung, die ihrerseits wieder störungsanfällig ist.

Der Erfindung liegt die Aufgabe zugrunde, ein Sicherheitsventil vorzuschlagen, bei dem die Überwachung ausgehend von der DE-B 2 349 237 unmittelbar am Montageort, d. h. am Wasserhahn, stattfindet.

Diese Aufgabe wird durch die im Anspruch 1 angegebenen Merkmale gelöst.

Grundsätzlich läßt sich diese Lehre mit jedem Ventil verwirklichen. In dem einfachen Fall, daß wenigstens das in Fließrichtung nachgeschaltete zweite Ventil einen Sitz und einen in Schließrichtung unter einer Rückstellkraft stehenden Ventilkörper aufweist, der mittels eines Kraftgebers mit bestimmter Anzugskraft von seinem Sitz abgehoben werden kann, wird vorgeschlagen, daß der Öffnungsquerschnitt des Sitzes die Anzugskraft des Kraftgebers und die Rückstellkraft, beispielsweise eines Zugmagneten, so bemessen sind, daß der Grenzwert des auf dieses zweite Ventil wirkenden Schließdruck, unterhalb dessen es nur öffnen kann, kleiner ist als der Einlaßdruck bei geschlossenem Sicherheitsventil.

Um die Wirkungsweise der Erfindung leichter verständlich zu machen, sei zunächst angenommen, daß der Schließvorgang des Sicherheitsventils mit Hilfe einer besonderen Zeitsteuerung in der Weise abläuft, daß zunächst das in Fließrichtung vorgeschaltete erste Ventil schließt und das zweite Ventil erst mit einem gewissen Zeitverzug nachfolgt. Nach dem Schließen des ersten Ventils ist die anschließende Fließstrecke praktisch druckfrei. Das zweite Ventil arbeitet quasi im Leerlauf. An ihm steht kaum ein Schließdruck an. Jedenfalls liegt der betreffende Schließdruckwert deutlich unter dem oben erwähnten Grenzwert. Deshalb reicht die verhältnismäßig klein bemessene Anzugskraft des Kraftgebers für den Ventilkörper des zweiten Ventils aus, um ihn abzuheben, sofern nur der Öffnungsbefehl dem Öffnungsbefehl des ersten Ventils zeitlich ein wenig voreilt. Wenn dann das erste Ventil öffnet, hat das zweite seine Öffnungsstellung schon erreicht.

Hat jedoch das erste Ventil einen Fehler, der sich im geschlossenen Zustand in Form eines Lecks äußert, so baut sich vor dem geschlossenen zweiten Ventil der volle Eingangsdruck auf, üblicherweise der Wasserleitungsdruck, der deutlich höher als der erwähnte Grenzwert ist. Er verhindert die Öffnung des zweiten Ventils, da jetzt die zum Abheben des Ventilkörpers benötigte Kraft größer als die Anzugskraft des Kraftgebers ist. Die Hausfrau wird also bei Inbetriebnahme der betreffenden Maschine den Wassermangel feststellen und kann den Fehler beheben lassen.

Es ist aber auch möglich, mit Hilfe einer geeigneten Überwachungseinrichtung aus der Nichtbefolgung des Öffnungsbefehls ein Störungssignal abzuleiten. Beispielsweise kann das Signal aus dem erhöhten Erregerstrom einer Magnetspule bei nicht angezogenem Anker meßtechnisch erfaßt werden, um damit eine optische oder akustische Anzeige zu geben.

Bei Geschirrspül- und Waschmaschinen werden heute servounterstützte Membranventile bevorzugt. Bei diesen läßt sich die Erfindung mit gleichem Erfolg und sogar noch weiteren Vorteilen einsetzen. Was vorstehend vom zweiten, in Fließrichtung nachgeschalteten Ventil angegeben wurde, gilt bei einem nachgeschalteten Membranventil für dessen Servoventil. Es wird vorgeschlagen, daß der Öffnungsquerschnitt des Servoventilsitzes und die Anzugskraft eines den zugehörigen Servoventilkörper betätigenden Kraftgebers so bemessen sind, daß der Grenzwert des auf den Servoventilkörper wirkenden Schließdrucks unterhalb dessen er nur öffnen kann, kleiner als der Einlaßdruck bei geschlossenem Sicherheitsventil ist.

Bei servounterstützten Membranventilen wirkt das Strömungsmedium beim Schließvorgang mit. Darauf mag es zurückzuführen sein, daß bei solchen Ventilen vorteilhafterweise auch dann, wenn die beiden Servoventile gleichzeitige Schließbefehle erhalten, das erste Membranventil immer schneller schließt als das zweite, so daß sich vor dem zweiten Membranventil kein nennenswerter Schließdruck aufbaut. Es kann daher mit verhältnismäßig kleiner Zugkraft schnell geöffnet werden. Jedenfalls wurde festgestellt, daß bei einem Sicherheitsventil aus zwei Membranventilen mit elektromagnetisch betätigbaren Servoventilkörpern die Magnetspulen elektrisch parallel geschaltet werden können und somit trotz gleichzeitiger Erregung beider Magnete das zweite Servoventil zeitlich nacheilend schließt und zeitlich voreilend öffnet. Bei einem Leck des ersten Ventils wirkt jedoch der Eingangsdruck auf den Servoventilkörper des zweiten Membranventils und hindert dieses am Öffnen.

Eine besonders zweckmäßige Ausführungsform der Erfindung besteht darin, daß die beiden h intereinander geschalteten Ventile möglichst gleich ausgeführt sind, insbesondere die Betätigungsvorrichtungen gleich ausgebildet und bemessen sind, jedoch der Öffnungsquerschnitt des Ventilsitzes bzw. des Servoventilsitzes des zweiten Ventils größer bemessen ist als der entsprechende Öffnungsquerschnitt des ersten Ventils. Hierdurch ergibt sich eine beträchtliche Rationalisierung insofern, als gleiche Magnetspulen, Jochbleche, Befestigungen, Magnetanker und Verschlußkörper verwendet werden können. Unterschiedlich brauchen in diesem Fall lediglich die Öffnungsquerschnitte der Sitze zu sein.

Bei einer angenommenen Anzugskraft eines Magneten von 1 Newton, einer Federkraft auf den Anker von 0,5 Newton und einem Wasserleitungsdruck im Bereich von etwa 0,2 bar bis 10 bar würde beispielsweise ein Servobohrungsdurchmesser von 8 mm beim zweiten Membranventil gegenüber einem Servobohrungsdurchmesser von 0,7 mm beim ersten Membranventil genügen, um bei gleichen Betätigungsmagneten ein Öffnen des zweiten Ventils im Falle eines Lecks des ersten Ventils mit Sicherheit zu verhindern. Der Grenzwert des Schließdrucks am zweiten Ventil läge bei diesem Beispiel bei 0,1 bar (1 bar ≙ 10⁵ Pa).

Zwar würde ein Defekt am nachgeschalteten zweiten Ventil entsprechend dem vorgeschlagenen Bemessungskonzept nicht erkannt werden. Dies beeinträchtigt jedoch den erzielten Sicherheitsgewinn nicht. Das zweite Ventil arbeitet lastfrei, während das erste ständig die volle Absperrleistung zu erbringen hat. Sämtliche Leckursachen, beispielsweise ein Ermüden der Membran, festgesetzte Schmutzteilchen am Haupt- oder Servoventilsitz, ein Verklemmen des Ventilkörpers usw. sind deshalb beim ersten Ventil eher zu erwarten als beim zweiten. Außerdem hat nach der zuletzt erwähnten bevorzugten Ausführungsform das zweite Ventil den größeren Servobohrungsdurchmesser. Eine Verunreinigung, die sich möglicherweise am ersten Servoventil verhängt, würde deshalb das zweite Servoventil passieren können. Darüber hinaus könnte auch der Hauptventilsitz des zweiten Ventils aus ähnlichen Erwägungen größer gemacht werden als der erste.

Ein Beispiel einer bevorzugten Ausführungsform der Erfindung wird nachfolgend anhand einer schematischen Zeichnung erläutert, die einen Längsschnitt eines Sicherheitsventils zeigt.

Das dargestellte Ventilgehäuse umfaßt zwei in Fließrichtung des Strömungsmittels in Reihe geschaltete servounterstützte Membranventile (1 und 2). Die Fließrichtung ist durch Pfeile angedeutet. Das Membranventil (2) ist nachgeschaltet. Das Ventilgehäuse insgesamt hat einen Einlaß (3) und einen Auslaß (4). Am Einlaß (3) herrscht, sofern wenigstens eines der Einzelventile geschlossen ist und das Wasser somit nicht strömt, ein Druck ($P_1$), worunter bei üblichen Hausgeräteanwendungen der Wasserleitungsdruck zu verstehen ist. Die Membran (5) des ersten Membranventils hat eine Öffnung (6), so daß sich der Druck ($P_1$) auch in die Steuerkammer (7) dieses ersten Membranventils hinein fortpflanzt. Der Druck am Auslaß (4) ist mit ($P_3$) bezeichnet. Der Mittelabschnitt der Membran (5) legt sich auf einen Ventilsitz, dessen Auslaßseite über einen gebogenen Kanalabschnitt mit dem Membranventil (2) verbunden ist und dessen Einlaß bildet. Der Druck ($P_2$) in dem gebogenen Kanalabschnitt herrscht auch in der Steuerkammer (8) des zweiten Membranventils (2), weil auch die zweite Membran (9) eine Öffnung (10) besitzt.

In den Mittelabschnitten der beiden Membranen (5 und 9), welche mit den zugehörigen ringförmigen Ventilsitzen zusammenwirken und diese absperren, befinden sich runde Servobohrungen, die jeweils durch einen Verschlußkörper (11 bzw. 12) verschlossen sind. Der Durchmesser ($D_2$) der Servobohrung im Mittelabschnitt der nachgeschalteten Membran (9) ist wesentlich größer bemessen als der Durchmesser ($D_1$) der Servobohrung im Mittelabschnitt der vorgeschalteten Membran (5). Die Verschlußkörper (11 und 12) für die Servobohrungen sind je mit einem Anker (13 bzw. 14) verbunden oder bil den mit diesen Ankern ein Stück. Die in ihren Abmessungen gleich ausgebildeten Anker werden von Federn (15 und 16) in Schließrichtung beaufschlagt und von ebenfalls gleich ausgebildeten und bemessenen Elektromagneten in Öffnungsrichtung angezogen. Die Magnete sind durch ihre Erregerwicklungen (17 und 18) schematisch angedeutet. Die Erregerwicklungen sind elektrisch parallel geschaltet. Das Öffnungssignal (19) des Sicherheitsventils erfolgt durch Anlegen einer entsprechenden Erregerspannung.

Das Sicherheitsventil soll im Beispiel zum Füllen einer Geschirrspül- oder Waschmaschine dienen. Nach der gewählten Darstellung befinden sich beide Membranventile im geschlossenen Zustand. Der Wasserleitungsdruck ($P_1$), der Bohrungsdruchmesser ($D_1$) und die Feder (15) bestimmen die Schließkraft für den Verschlußkörper (11) und der Druck ($P_2$), der Bohrungsdruchmesser ($D_2$) und die Feder (16) die Schließkraft für den Verschlußkörper (12).

Der Druck ($P_3$) am Auslaß (4) ist vernachlässigbar. Er entspricht praktisch dem Umgebungsdruck. Erfahrungsgemäß ist aber auch der Druck ($P_2$) nahezu gleich dem Umgebungsdruck, so daß er keine nennenswerte Schließkraft auf den Verschlußkörper (12) ausübt. Dies dürfte so zu erklären sein, daß beim Schließvorgang der hohe Wasserleitungsdruck ($P_1$) das erste Membranventil (1) sehr schnell schließt, wodurch dem zweiten Membranventil (2) "das Wasser abgegraben wird". Der Druck in der Steuerkammer (8) hat sich also im wesentlichen schon entspannt, bis es zu einem vollständigen Aufliegen der Membran (9) auf ihrem Sitz und zu einem vollständigen Verschluß der zweiten Servobohrung durch den Verschlußkörper (12) kommt.

Wird unter normalen Betriebsbedingungen das Öffnungssignal gegeben, so öffnet der Verschlußkörper (12) sofort, da die wirkende Magnetkraft kaum eine Gegenkraft findet. Sodann öffnet aber auch der Verschlußkörper (11) und dementsprechend die Membran (5), so daß das Wasser fließen kann.

Tritt jedoch beim ersten Membranventil eine Störung ein, die ein möglicherweise nur kleines Leck dieses Ventils zur Folge hat, so baut sich zwischen dem ersten und dem dicht schließenden zweiten Membranventil der Druck ($P_2$) auf praktisch den gleichen Wert wie ($P_1$) auf. Infolge der größeren Servobohrung wirkt somit auf den Verschlußkörper (12) eine größere Schließkraft, als sie jemals auf den Verschlußkörper (11) wirken kann. Diese Schließkraft überwindet der zugehörige Magnet nicht. Wenn also das Öffnungssignal (19) kommt, öffnet der Verschlußkörper (12) nicht, so daß das Sicherheitsventil insgesamt geschlossen bleibt. Somit ist das Leck am Membranventil (1) zu erkennen. Mit elektrischen Maßnahmen, wie sie oben schon angedeutet worden sind, läßt sich aus der Erregung des Magneten bei nicht angezogenem Anker (14) zusätzlich ein Warnsignal ableiten.

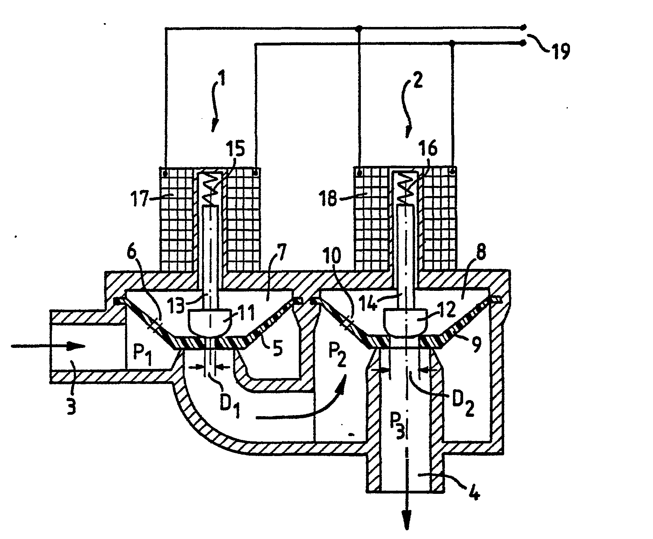

## Patentansprüche

1. Sicherheitsventil, insbesondere zur Leckverhinderung für Geschirrspüler, Waschmaschinen und dgl., bestehend aus zwei in Reihe geschalteten Ventilen mit diesen einzeln zugeordneten Betätigungsvorrichtungen, dadurch gekennzeichnet, daß das in Fließrichtung nachgeschaltete zweite Ventil einen Sitz und einen in Schließrichtung unter einer Rückstellkraft stehenden Ventilkörper (12, 14) aufweist, der mittels eines Kraftgebers der Betätigungsvorrichtung mit bestimmter Anzugskraft von seinem Sitz abgehoben werden kann und daß der Öffnungsquerschnitt des Sitzes und die Anzugskraft des Kraftgebers und die Rückstellkraft so bemessen sind, daß der Grenzwert des auf dieses zweite Ventil wirkenden Schließdrucks ($P_2$), unterhalb dessen es nur öffnen kann und oberhalb dessen es geschlossen bleibt, kleiner ist als der bei geschlossenem Sicherheitsventil am Eingang des ersten Ventils anstehende Druck ($P_1$).

2. Sicherheitsventil nach Anspruch 1, dadurch gekennzeichnet, daß wenigstens das in Fließrichtung nachgeschaltete zweite Ventil als servounterstütztes Membranventil (2) mit Öffnungsquerschnitt ($D_2$) ausgebildet ist mit einer Steuerkammer (8), die durch eine Öffnung (10) mit dem Einlaß dieses Membranventils (2) und über den Öffnungsquerschnitt ($D_2$) mit dem Auslaß (4) verbunden ist, und daß der Öffnungsquerschnitt ($D_2$) des Servoventilsitzes und die Anzugskraft des den zugehörigen Servoventilkörper (12) betätigenden Kraftgebers (18) und die Rückstellkraft so bemessen sind, daß der Grenzwert des auf den Servoventilkörper (12) wirkenden Schließdrucks ($P_2$), unterhalb dessen er nur öffnen kann, kleiner als der Einlaßdruck ($P_1$) bei geschlossenem Sicherheitsventil ist.

3. Sicherheitsventil nach Anspruch 1 mit zwei nicht servounterstützten Ventilen oder nach Anspruch 2 mit zwei servounterstützten Membranventilen, dadurch gekennzeichnet, daß die Betätigungsvorrichtungen beider Ventile gleich ausgebildet sind und der Öffnungsquerschnitt ($D_2$) des Ventilsitzes bzw. des Servoventilsitzes des zweiten Ventils (2) größer bemessen ist als der entsprechende Öffnungsquerschnitt ($D_1$) des ersten Ventils (1).

4. Sicherheitsventil nach einem der vorhergehenden Ansprüche, dadurch gekennzeichnet, daß eine Überwachungseinrichtung vorgesehen ist, welche aus der Nichtbefolgung des Öffnungsbefehls an die Betätigungsvorrichtung des nachgeschalteten Ventils eine Störungsmeldung ableitet.

## Claims

1. Safety valve, especially for preventing leaks in dish-washers, washing machines and the like, consisting of two valves connected series, with actuating devices individually assigned to these, characterized in that the second valve following in the direction of flow has a seat and a valve body (12, 14) which is under a restoring force in the closing direction and which can be lifted off from its seat with a specific attractive force by means of a force transmitter of the actuating device, and in that the orifice cross-section of the seat and the attractive force of the force transmitter and the restoring force are calculated so that the limit value of the closing pressure ($P_2$) acting on this second valve, below which it can only open and above which it remains closed, is lower than the pressure ($P_1$) prevailing at the entrance of the first valve, with safety valve closed.

2. Safety valve according to claim 1, characterized in that at least the second valve following in the direction of flow is designed as a servo-assisted diaphragm valve (2) with an orifice cross-section ($D_2$), having a control chamber (8) which is connected by means of a port (10) to the inlet of this diaphragm valve (2) and via the orifice cross-section ($D_2$) to the outlet (4), and in that the orifice cross-section ($D_2$) of the servovalve seat and the attractive force of the force transmitter (18) actuating the associated servo-valve body (12) and the restoring force are calculated so that the limit value of the closing pressure ($P_2$) acting on the servo-valve body (12), below which it can only open, is lower than the inlet pressure ($P_1$), with the safety valve closed.

3. Safety valve according to claim 1 with two valves not servo-assisted or according to claim 2 with two servo-assisted diaphragm valves, characterized in that the actuating devices of the two valves are of identical design, and the orifice cross-section ($D_2$) of the valve seat or of the servo-valve seat of the second valve (2) is calculated larger than the corresponding orifice cross-section ($D_1$) of the first valve (1).

4. Safety valve according to one of the preceding claims, characterized in that there is a monitoring device which derives a fault indication from non-compliance with the opening command sent to the actuating device of the following valve.

**Revendications**

1. Soupape de sûreté, en particulier pour éviter les fuites, pour des lave-vaisselle, des machines à laver et analogues, comportant deux soupapes montées en série ayant des dispositifs d'actionnement associés individuellement à celles-ci, caractérisée en ce que la seconde soupape, disposée en aval dans le sens d'écoulement, présente un siège et un corps de soupape (12, 14) se trouvant sous l'action d'une force de rappel dans le sens de fermeture, lequel peut être soulevé de son siège au moyen d'un générateur de force du dispositif d'actionnement à force d'entraînement déterminée, et en ce que la section transversale d'ouverture du siège et la force d'entraînement du générateur et la force de rappel sont telles que la valeur limite de la pression de fermeture ($P_2$) agissant sur cette seconde soupape, au-dessous de laquelle elle peut seulement s'ouvrir et au-dessus de laquelle elle reste fermée, est plus petite que la pression ($P_1$) à l'entrée de la première soupape, lorsque la soupape de sûreté est fermée.

2. Soupape de sûreté selon la revendication 1, caractérisée en ce qu'au moins la seconde soupape, disposée en aval dans le sens d'écoulement, est réalisée sous forme de soupape à diaphragme assistée (2) ayant une section transversale d'ouverture ($D_2$), avec une chambre de commande (8), qui est reliée, par un orifice (10) à l'admission de cette soupape à diaphragme (2) et, par la section transversale d'ouverture ($D_2$), à l'échappement (4), et en ce que la section transversale d'ouverture ($D_2$) du siège de la servo-soupape et la force d'entraînement du générateur (18) actionnant le corps de soupape (12) correspondant et la force de rappel sont telles que la valeur limite de la pression de fermeture ($P_2$) agissant sur le corps de soupape (12), au-dessous de laquelle elle peut seulement s'ouvrir, est plus petite que la pression d'admission ($P_1$), lorsque, la soupape de sûreté est fermée.

3. Soupape de sûreté selon la revendication 1 comportant deux soupapes non assistées, ou selon la revendication 2 comportant deux soupapes à diaphragme assistées, caractérisée en ce que les dispositifs d'actionnement des deux soupapes sont réalisés de façon identique et la section transversale d'ouverture ($D_2$) du siège de soupape ou du siège de servo-soupape de la seconde soupape (2) est plus grande que la section transversale d'ouverture correspondante ($D_1$) de la première soupape (1).

4. Soupape de sûreté selon l'une des revendications précédentes, caractérisée en ce qu'un dispositif de surveillance est prévu, lequel, lorsque l'ordre d'ouverture n'est pas suivi, transmet une indication de défaut au dispositif d'actionnement de la soupape en aval.